# EUROPEAN PATENT SPECIFICATION

(11) **EP 3 677 519 B1**
(45) Date of publication and mention of the grant of the patent: **07.07.2021**
(21) Application number: 19858542.4
(22) Date of filing: 21.08.2019
(51) Int. Cl.: B64G 1/64

(54) **SPLIT NUT TYPE UNLOCKING DEVICE WITH NON-EXPLOSIVE ACTUATOR**
ENTRIEGELUNGSVORRICHTUNG VOM TYP EINER GETEILTEN MUTTER MIT NICHTEXPLOSIVEM STELLGLIED
DISPOSITIF DE DÉVERROUILLAGE DE TYPE À ÉCROU FENDU COMPRENANT UN ACTIONNEUR NON EXPLOSIF

(30) Priority: 04.09.2018 CN 201821442102 U; 30.10.2018 CN 201811279342
(43) Date of publication of application: 08.07.2020
(73) Proprietor: Beijing Smart-Wing Aerospace Technology Ltd., Beijing 101202 (CN)
(72) Inventor: LIU, Jingying, Beijing 101202 (CN)
(74) Representative: Kayahan, Senem
(86) International application number: PCT/CN2019/101669
(87) International publication number: WO 2020/048313

(56) References cited:
- CN-A- 101 665 156
- CN-A- 103 231 813
- CN-A- 106 494 651
- CN-A- 106 494 651
- CN-A- 107 719 707
- CN-U- 209 535 506
- KR-A- 20120 009 568
- US-A- 5 221 171
- US-A1- 2005 084 364
- XIONG ET AL: "Research on the Release Device Based on Shape Memory Alloy", MASTER THESIS, BEIJING INSTITUTE OF TECHNOLOGY, CN, 1 January 2015 (2015-01-01), pages 1-87, XP009519895, [retrieved on 2015-07-15]
- Xiong, Shihui: "Research on release device based on shape memory alloy", Master Thesis, no. 07, 15 July 2015 (2015-07-15), pages 1-87, XP009519895, ISSN: 1674-0246

## Description

### TECHNICAL FIELD

The present disclosure relates to the technical field of hold down and release mechanisms used in machinery, aviation and aerospace. More particularly, the present disclosure relates to a non-explosive release device for separation using a segmented nut.

### BACKGROUND

Connection and separation of separable structures or devices are generally required on aircraft, spacecraft, ships and other transportation equipment. The pyrotechnical release devices are mainly used currently, e.g., pyrotechnical cutters, explosive bolts, and pyrotechnical locking devices. These devices are essentially small explosives and thus significantly restricted during management, transportation, use and maintenance. Moreover, these devices function along with a large amount of produced shocks, smoke and residual fragments, which severely affects or even damages the adjacent devices. Furthermore, the pyrotechnical devices are disposable products with poor cost-efficiency. Therefore, in the current technical field, it is imperative to develop a non-explosive release device that is convenient in management, transportation, use and maintenance, as well as contamination-free, reusable, and economical.

At present, extensive research on the non-explosive release devices have been performed in the prior art. For example, "Research on the Release Device Based on Shape Memory Alloy", Xiong Shihui, Beijing Institute of Technology, China Master's Theses Full-Text Database, Engineering Technology Series II • Aerospace Science and Engineering, 2015; Chapter 4 focuses on the structural design and study of shape memory alloy (SMA) connection-disconnection device and discloses a non-explosive release device. During separation, the SMA wire is heated to above 100°C by initiating power supply, and the SMA wire shrinks and drives the detent latch to axially move upwards to release the radial restraint on the detent ball. The detent ball moves radially under the action of the locking sleeve to release the axial restraint on the locking sleeve. The locking sleeve is driven by the driving spring to axially move downward to push the detent ball downward to set the segmented nut free. Under the action of the separation cone and stressed by the bolt pre-tightening force, the segmented nut is radially opened to release the bolt.

However, "the locking sleeve axially moves downward to drive the detent ball to slide downward to release the radial restraint on the segmented nut" is the most serious technical defect. The detent balls (corresponding to reference numerals 13 and 14 in this thesis) are fixed in the locking sleeve (corresponding to reference numeral 4 in this thesis). During the release process, the detent balls do not move relative to the locking sleeve, instead, the detent balls slide on the outer cylindrical surface of the segmented nut 2 to realize the release function. The detent balls and the locking sleeve in such a fixed connection will result in the following shortcomings. 1) The segmented nut is in a clearance fit with the detent balls in the radial direction, as a result, the force applied on the detent balls by the segmented nut is impossible a normal force exactly along the radial direction, and a downward component force is inevitably generated in the axial direction. However, the detent balls are fixed in the locking sleeve, in consequence, both the normal force and the axial downward component force applied on the detent balls by the segmented nut will be delivered to the locking sleeve, which pushes the locking sleeve to excessively compress the detent balls at the lower end, thereby severely affecting the release function of the device. 2) The axial downward component force on the locking sleeve is directly affected by the load of screwing the screw to the segmented nut, resulting in different release capabilities of the device under different loads, which significantly diminishes the reliability of using the device under different loads. 3) The detent balls and the locking sleeve are in a fixed connection, which complicates the implementing process, generally requiring welding, interference fit and adhesive bonding, and thus is not advantageous to engineering implementation.

### SUMMARY

In view of the shortcomings of existing pyrotechnical release devices in the prior art, the present disclosure provides a non-explosive release device using a segmented nut.

The technical solution adopted by the present disclosure is as follows. A non-explosive release device using a segmented nut includes a cage, a housing, a segmented nut, a locking ball, a driving spring, a separation cone, a separation/reset spring, a locking sleeve, a detent ball, a detent latch, a non-explosive actuator and an end cover. The cage, the housing and the end cover form a closed space. The locking sleeve is located inside the housing. The inner cylindrical surface of the locking sleeve and the outer cylindrical surface of the cage form a hole-and-shaft fitting. The lower end of the locking sleeve is limited by the detent ball to maintain the spatial position of the locking sleeve. The driving spring is pre-compressed to compress the locking sleeve. The locking ball is located in a corresponding hole inside the cage, one side of the locking ball is in contact with the locking sleeve, and the other side of the locking ball is in contact with the segmented nut. The segmented nut is completely closed to form a complete thread under the action of the locking ball. The upper end of the segmented nut is provided with a conical surface matched with a corresponding conical surface of the cage. The lower end of the segmented nut is provided with a conical surface matched with a corresponding conical surface of the separation cone. The outer cylindrical surface of the separation cone and the inner cylindrical surface of the cage form a shaft-and-hole fitting. The lower end of the separation cone is tightly supported by the separation/reset spring to maintain the spatial position of the separation cone. The outer cylindrical surface of the detent latch and the inner cylindrical surface of the cage form a shaft-and-hole fitting. Meanwhile, the downward movement of the detent latch is limited by the detent ball to maintain the spatial position of the detent latch. A groove is provided on the top of the detent latch and configured to place the separation/reset spring. The detent ball is located in a corresponding hole inside the cage. The non-explosive actuator is located in a space formed between the housing and the end cover. The output end of the non-explosive actuator is connected to the detent latch to drive the detent latch to move.

The segmented nut can be radially divided into two, three or more segments, and forms a complete thread in a closed state to realize the connection function. In the closed state, the segmented nut is locked by the upper row locking balls and the lower row locking balls that are arranged circumferentially. The upper side and the lower side of each segment of the segmented nut are in contact with two locking balls, respectively, to maintain a force balance. In addition, the upper end of the segmented nut is matched with the cage through a conical surface or a flat surface, wherein the conical surface for matching facilitates the smooth separation of the segmented nut, but results in an increased pressing force of the segmented nut to the locking ball, which is not conducive to the release of the release device. Therefore, it is feasible to reasonably select the conical surface or the flat surface to balance the smooth separation of the segmented nut and the improved releasing reliability. The lower end of the segmented nut is matched with the separation cone through a conical surface. During the release process, the separation/reset spring pushes the separation cone to move, and the segmented nut is smoothly and rapidly opened through the lower conical surface.

The upper end of the segmented nut is provided with an anti-rotation groove configured to be engaged with the anti-rotation key on the cage to prevent a rotation of the segmented nut caused by the friction between threads in the course of screwing a screw into the closed segmented nut for loading, so as to avoid a failure to load the release device. After the multiple segments of the segmented nut are combined into a complete thread, the outer surface of the segmented nut is a complete and smooth cylinder without matched steps to facilitate processing.

The cage entirely includes an inner cylinder and an outer cylinder. The inner cylinder is relatively long, and is configured to maintain the spatial positions of the locking ball and the detent ball and provide a moving track for the segmented nut, the separation cone and the detent latch. In addition, the lower end of the inner cylinder is fitted with a cylindrical hole at the bottom of the housing. The outer cylinder is relatively short and is connected to the housing by means of a thread connection, a pin connection, welding, interference fit, adhesive bonding and others. The upper end of the inner cylinder is provided with an anti-rotation key engaged with the anti-rotation groove on the segmented nut. Two rows of holes are circumferentially distributed on the side wall of the upper portion of the inner cylinder and configured to restrict the spatial positions of the locking balls. A row of holes are circumferentially and uniformly distributed at the lower portion of the inner cylinder and configured to restrict the spatial positions of the detent balls. The upper portion of the cage is provided with a conical surface or a flat surface matched with the upper end of the segmented nut. The center of the top surface of the cage is provided with a hole configured to screw the connection screw into the segmented nut, and a flange configured to be connected to an external structure.

The upper end of the separation/reset spring is located in the lower end hole of the separation cone, and the lower end of the separation/reset spring is located in the upper end hole of the detent latch. The separation/reset spring is not connected to the cage or other structures. During the working process of the release device, both the upper end and the lower end of the separation/reset spring can move, but the separation/reset spring always maintains a compressed state. The separation/reset spring can realize both separation and reset due to its connection to the separation cone and the detent latch. During the release process, the separation/reset spring pushes the separation cone to move upward to smoothly open and separate the segmented nut. During the reset process, the separation/reset spring presses downward the detent latch to squeeze the detent ball into the detent ball hole of the cage, so as to lock the locking sleeve and realize the reset function. In addition, due to the compact assembly structure of the separation/reset spring, the cage is not specifically provided with a special structure designed as a mounting support of the separation/reset spring, which reduces the complexity of the cage and shortens the axial size of the release device.

The entire locking sleeve is a thin-wall cylinder structure. The upper end of the inner wall of the locking sleeve is provided with a first reset ramp. During the release process, the first reset ramp ensures that the ball can smoothly slide into the bottom of the ramp to reduce the damage to the locking sleeve caused by the impact during release. Meanwhile, during the reset process, the ramp can apply a radial component force to the locking ball to ensure that the locking ball can be pushed back into the corresponding hole inside the cage, so as to reset the release device. The lower end of the locking sleeve is provided with a first detent ramp, the first detent ramp is supported by the detent ball in the locking state to lock the locking sleeve and maintain the locking state of the release device. During release, the first detent ramp applies a radial component force to the detent ball and pushes the detent ball into a corresponding groove of the detent latch to realize the release. Also, the normal force applied on the detent latch by the detent ball is determined by the angle of the ramp, and thus the load that the non-explosive actuator requires to push the detent latch is determined accordingly. Therefore, the angle of the ramp can be designed according to the actual use situation. The inner wall of the locking sleeve is in a precise fit with the outer wall of the inner cylinder of the cage, and the outer wall of the locking sleeve is in a clearance fit with the driving spring. In the locking state, the first reset ramp of the locking sleeve should be located at a predetermined position above the corresponding locking ball hole on the cage, to ensure that the locking ball can be locked in the locking state. The locking ball can roll to the bottom of the ramp when the driving spring pushes the locking sleeve downward to the extreme position. In the locking state, the first detent ramp of the locking sleeve should exactly contact the detent ball to maintain the locking state of the release device. Meanwhile, a small gap is reserved between the top end of the locking sleeve and the cage, to ensure that the locking sleeve is not mis-positioned in the axial direction.

The outer portion of the housing is a cylindrical structure, and the inner portion of the housing is a stepped hole structure. The upper end of the outer wall of the housing can be connected to the inner wall of the outer cylinder of the cage by a thread connection or in other manners. A cylindrical hole at the lower end of the inner portion of the housing is fitted with the outer wall of the inner cylinder of the cage. The large cylindrical hole at the upper end of the inner portion of the housing provides a mounting and moving space for the driving spring and the locking sleeve. Multiple grooves and arc structures are provided at the inner portion of the housing and configured to arrange the non-explosive actuating element and the power supply wire. Two or more reset holes are symmetrically distributed at the bottom of the housing and configured to insert the reset pins of the reset tool therein and push the locking sleeve to move to achieve the reset.

The reset tool of the release device is a thin-wall cylinder structure with one end closed. The cylinder wall of the reset tool is provided with one or more U-shaped notches configured to avoid the power supply wire pulled out from the side wall of the release device during the reset process. Two or more reset pins are symmetrically arranged on the base of the reset tool, and the number and distribution manner of the two or more reset pins are the same as those of the reset holes at the bottom of the housing.

The reset method of the release device includes: pushing the locking sleeve upward to the locked position of the locking sleeve by the reset tool, synchronously pushing the locking ball to lock the segmented nut, compressing the driving spring, and synchronously squeezing the detent ball out by the detent latch, so as to lock the locking sleeve.

The upper end of the separation cone is provided with a conical surface matched with the lower end of the segmented nut. The side wall of the separation cone is an outer cylindrical surface matched with the inner wall of the inner cylinder of the cage. The bottom of the separation cone is provided with a cylindrical hole configured to mount the separation/reset spring.

The working principle of the device is as follows. In the locking state, the segmented nut is locked by the locking ball, and the thread is closed and functions as a common thread to achieve the connection function. When separated, the non-explosive actuator is powered and actuated to output a displacement and force to the outside, and pushes the detent latch to move upward; the detent ball slides into the corresponding groove of the detent latch to release the constraint on the locking sleeve; the locking sleeve moves downward under the elastic force of the driving spring, so that the locking ball slides into the corresponding groove of the locking sleeve to release the constraint on the segmented nut; and the segmented nut is opened under the action of the separation/reset spring to disconnect the screw connection and complete the release. When reset, the reset tool is inserted from the bottom of the release device to pin the locking sleeve up to the locked position of the locking sleeve; the detent latch pushes the detent ball downward to squeeze the detent ball back to the locked position of the detent ball under the action of the separation/reset spring, so as to re-lock the locking sleeve, meanwhile, the locking sleeve squeezes all the locking balls back to the locked positions of the respective locking balls to re-lock the segmented nut, so that the segmented nut forms a complete thread to reset the device.

Compared with existing non-explosive release devices in the prior art, the release device of the present disclosure has a simple structure, compact size, high release reliability, and is easy to reset. The advantages of the present disclosure are specifically as follows.
(1) In the present disclosure, the locking balls are not fixed in the locking sleeve, and thus the processes such as welding and interference fit that are not advantageous to engineering implementation are not required. Besides, in the present disclosure, the locking ball is in clearance fits with the locking sleeve, the segmented nut and the cage, and the locking ball is movably placed in the corresponding hole in the cage. The locking ball is in point contact with both the locking sleeve and the segmented nut. Only the normal force applied on the locking ball by the segmented nut can be transmitted to the locking sleeve, while the downward component force in the axial direction is offset by the supporting force applied on the locking ball by the corresponding hole in the cage, so as to prevent the axial component force from transmitting to the locking sleeve. Consequently, the device has a strong release capability and is highly reliable under different load conditions.
(2) In the present disclosure, the separation/reset spring can realize both separation and reset, and is directly mounted between the separation cone and the detent latch, which diminishes the number of components, reduces the complexity of the components, and simplifies the structure.
(3) In the present disclosure, the release load is adjusted by designing the angle of the upper end of the segmented nut and the elastic force of the driving spring, and the output load required for the non-explosive actuator can be adjusted by designing the angle of the first detent ramp at the lower end of the locking sleeve, which facilitates the serialization design of the release device.
(4) The release device of the present disclosure can be reset by pinning the locking sleeve up from the bottom by a special reset tool, which can be easily performed.

### BRIEF DESCRIPTION OF THE DRAWINGS

FIG. 1 is a schematic diagram showing the locking state of the non-explosive release device using the segmented nut;
FIG. 2 is a schematic diagram showing the release state of the non-explosive release device using the segmented nut;
FIG. 3 is a schematic diagram showing the structural features of the non-explosive release device using the segmented nut;
FIG. 4 is a schematic diagram showing a force analysis of the segmented nut;
FIG. 5 is a schematic diagram showing a force analysis of the detent ball;
FIG. 6 is a schematic diagram showing the fitting between the segmented nut and the detent ball;
FIG. 7 (a) is a schematic diagram showing the uniform distribution of the locking balls;
FIG. 7 (b) is a schematic diagram showing the nonuniform distribution of the locking balls;
FIG. 8 is a schematic diagram showing the structural features of the anti-rotation key on the cage;
FIG. 9 is a schematic diagram showing the fitting between the segmented nut and the anti-rotation key;
FIG. 10 (a) is a schematic diagram showing the reset hole;
FIG. 10 (b) is a schematic diagram showing the working principle of the reset tool;
FIG. 11 is a schematic diagram showing the reset tool;
FIG. 12 is a schematic diagram showing an embodiment of the separation of the separation/reset spring;
FIG. 13 is a schematic diagram showing another embodiment of the separation of the separation/reset spring;
FIG. 14 is a schematic diagram showing an embodiment of the structures of the separation cone and the detent latch; and

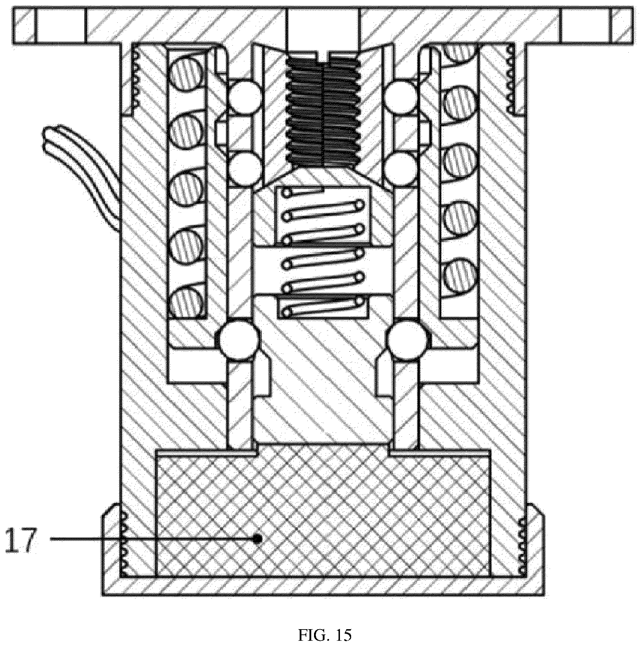

FIG. 15 is a schematic diagram showing another embodiment of the structures of the separation cone and the detent latch.

The definitions of the reference numerals in the drawings are as follows: 1, cage; 2, housing; 3, segmented nut; 4, locking ball; 5, driving spring; 6, separation cone; 7, separation/reset spring; 8, locking sleeve; 9, detent ball; 10, detent latch; 11, non-explosive actuator; 12, end cover; 13, reset pin; 14, first cage; 15, second cage; 16, connection screw; 17, electromagnet; 101, anti-rotation key; 201, arc transition; 202, reset hole; 203, large cylindrical hole; 204, small cylindrical hole; 205, grooved structure; 301, first separation ramp; 302, second separation ramp; 303, anti-rotation groove; 401, upper row locking balls; 402, lower row locking balls; 701, separation spring; 702, reset spring; 801, first reset ramp; 802, first detent ramp; 1001, second detent ramp; 1002, second reset ramp; 1003, sliding hole; 1101, backup memory alloy wire.

### DETAILED DESCRIPTION OF THE EMBODIMENTS

The present disclosure will be further described hereinafter with reference to the drawings and embodiments.

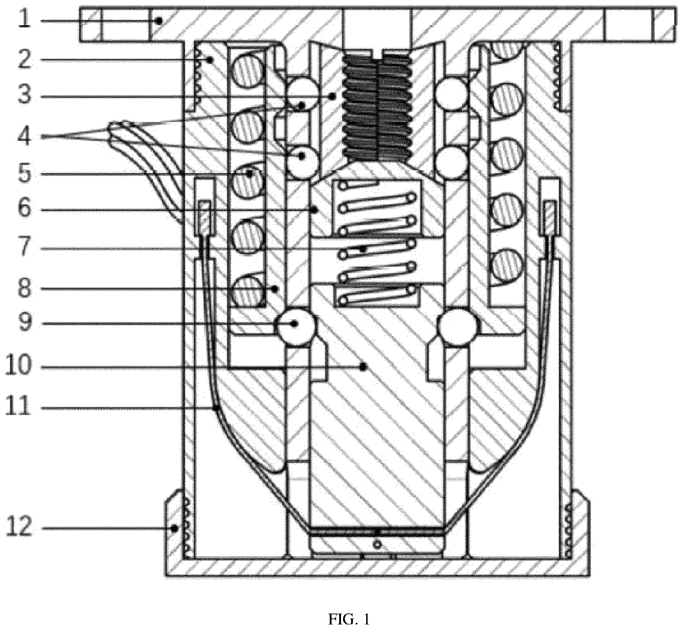

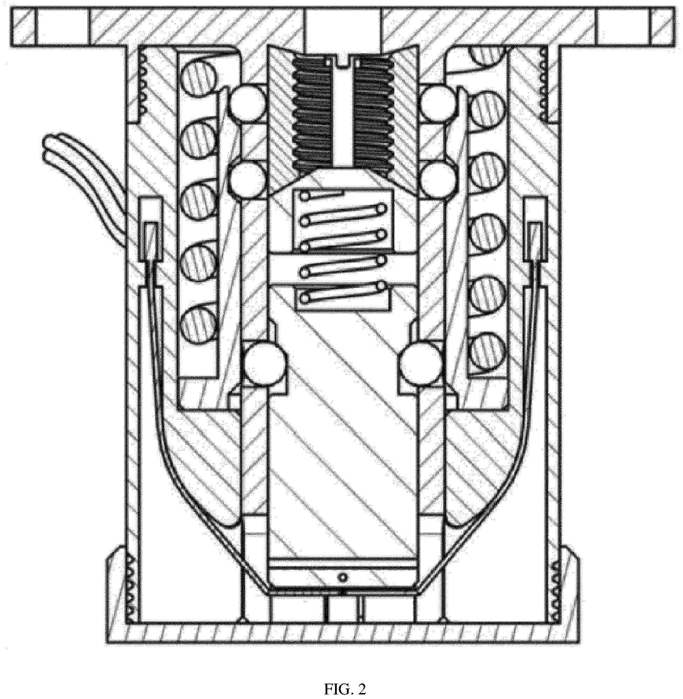

The present disclosure provides a non-explosive release device using a segmented nut, FIG. 1 shows the device in the locking state, and FIG. 2 shows device in the release state. In the present disclosure, various non-explosive actuators can be employed to realize the release, specifically including electromagnetic actuators, shape memory alloy actuators, motors, piezoelectric actuators, paraffin actuators, hot knife actuators and the like. Hereinafter, two specific embodiments of the release device using the shape memory alloy actuator and the release device using the electromagnetic actuator of the present disclosure will be illustrated with reference to the drawings.

In an embodiment of the present disclosure shown in FIG. 1, the release device includes: the cage 1, the housing 2, the segmented nut 3, the locking ball 4, the driving spring 5, the separation cone 6, the separation/reset spring 7, the locking sleeve 8, the detent ball 9, the detent latch 10, the non-explosive actuator 11 and the end cover 12. The cage 1, the housing 2 and the end cover 12 form a closed space. The locking sleeve 8 is located inside the housing 2. The inner cylindrical surface of the locking sleeve 8 and the outer cylindrical surface of the cage 1 form a hole-and-shaft fitting. The lower end of the locking sleeve 8 is limited by the detent ball 9 to maintain the spatial position of the locking sleeve 8. The driving spring 5 is pre-compressed to compress the locking sleeve 8. The locking ball 4 is located in the corresponding hole inside the cage 1. One side of the locking ball 4 is in contact with the locking sleeve 8, and the other side of the locking ball 4 is in contact with the segmented nut 3. The segmented nut 3 is completely closed to form a complete thread under the action of the locking ball 4. The upper end of the segmented nut 3 is provided with the first separation ramp 301 matched with a corresponding conical surface inside the cage 1. The lower end of the segmented nut 3 is provided with the second separation ramp 302 matched with a corresponding conical surface of the separation cone 6. The outer cylindrical surface of the separation cone 6 and the inner cylindrical surface of the cage 1 constitute a shaft-and-hole fitting. The lower end of the separation cone 6 is tightly supported by the separation/reset spring 7 to maintain the spatial position of the separation cone 6. The outer cylindrical surface of the detent latch 10 and the inner cylindrical surface of the cage 1 form a shaft-and-hole fitting. Meanwhile, the second reset ramp 1002 of the detent latch 10 is locked by the detent ball 9 to restrict the detent latch 10 from moving down freely, so as to maintain the spatial position of the detent latch 10. A groove is provided on the top of the detent latch 10 and configured to place the separation/reset spring 7. The detent ball 9 is located in a corresponding hole inside the cage 1. The non-explosive actuator 11 is located in a space formed by the housing 2 and the end cover 12. The output end of the non-explosive actuator 11 is connected to the detent latch 10 to drive the detent latch 10 to move.

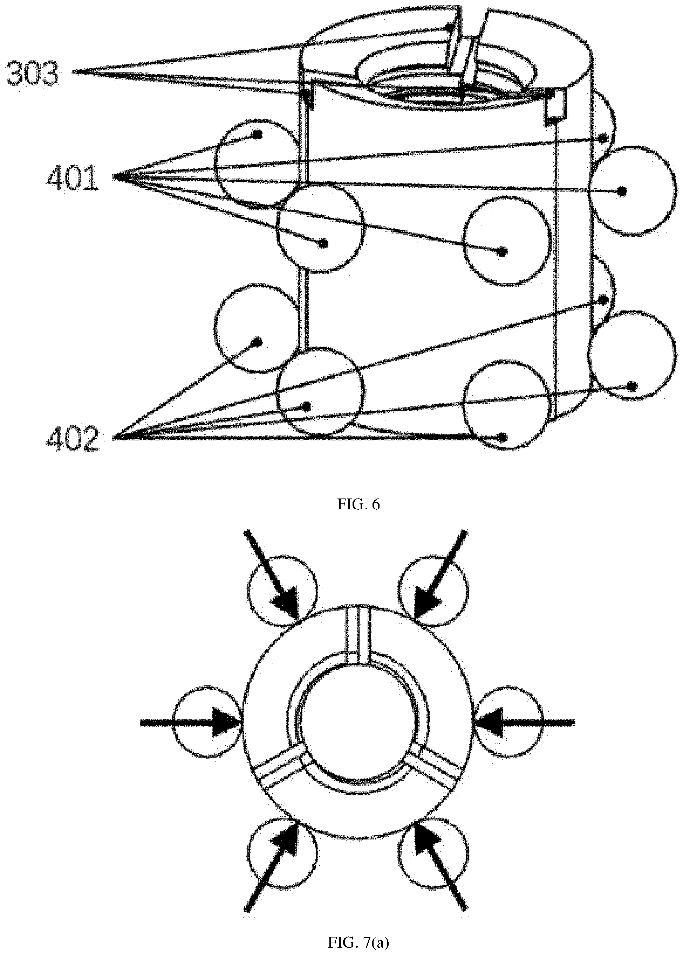

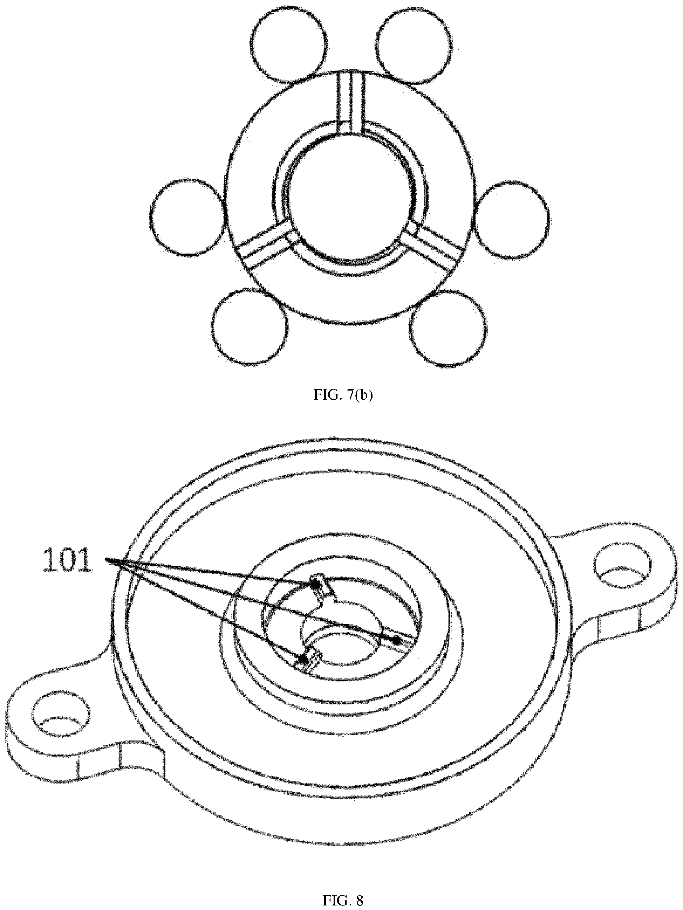

The segmented nut 3 can be radially divided into two, three or more segments, and forms a complete thread in a closed state to realize the connection function. As shown in FIG. 6, in the closed state, the segmented nut 3 is locked by the upper row locking balls 401 and the lower row locking balls 402 that are arranged circumferentially. As shown in FIG. 7 (a), the upper side and the lower side of each segment of the segmented nut 3 are in contact with two locking balls, respectively, to maintain a force balance on the entire segmented nut 3. The locking balls 4 can be uniformly distributed along the circumferential direction of the segmented nut 3, as shown in FIG. 7 (a), or the locking balls 4 can be nonuniformly distributed by optimization according to the force condition, as shown in FIG. 7 (b).

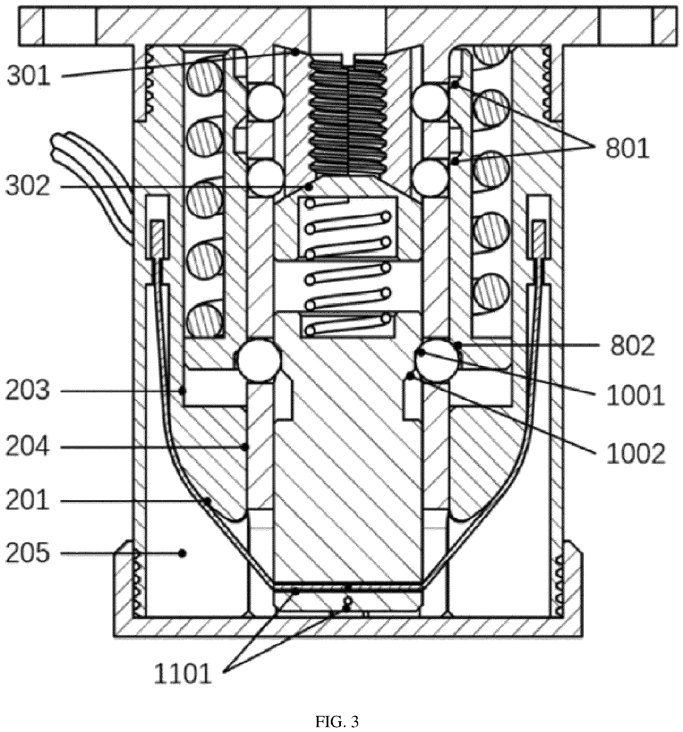

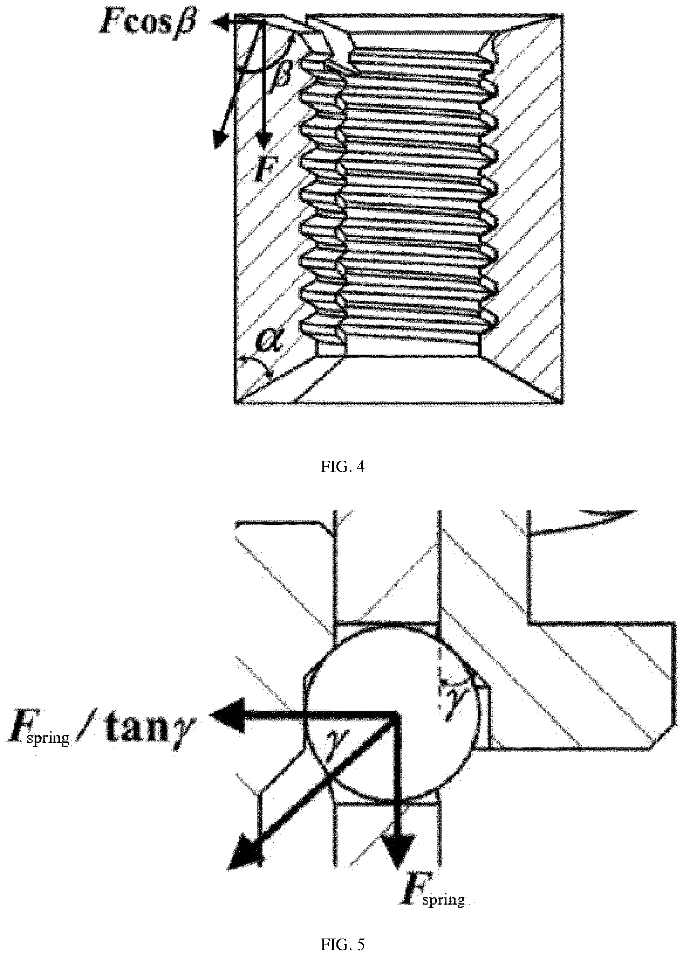

As shown in FIG. 3, the upper end of the segmented nut 3 fits with the cage 1 through the first separation ramp 301 to facilitate the smooth separation of the segmented nut. As shown in FIG. 4, in the locking state, the locking force is F, due to the first separation ramp, the horizontal component force applied on the segmented nut 3 is *Fcosβ,* which allows the segmented nut 3 to be rapidly separated. Also, due to the first separation ramp, the segmented nut 3 will apply a pressing force *Fcosβ* to the locking ball 4, which is not conducive to the release of the release device. Therefore, in the specific implementation process, it is feasible to balance the smooth separation of the segmented nut and the improved releasing reliability by selecting a reasonable angle *β* of the first separation ramp 301 or directly using a flat surface under extreme conditions. The lower end of the segmented nut 3 fits with the separation cone 6 through the second separation ramp 302. During the release process, the separation/reset spring 7 pushes the separation cone 6 to move, and the segmented nut 3 is smoothly and rapidly opened by the second separation ramp 302. In the specific implementation process, the angle *α* of the second separation ramp 302 can be specifically designed according to the elastic force of the separation/reset spring 7 and the friction coefficient between the matched surfaces.

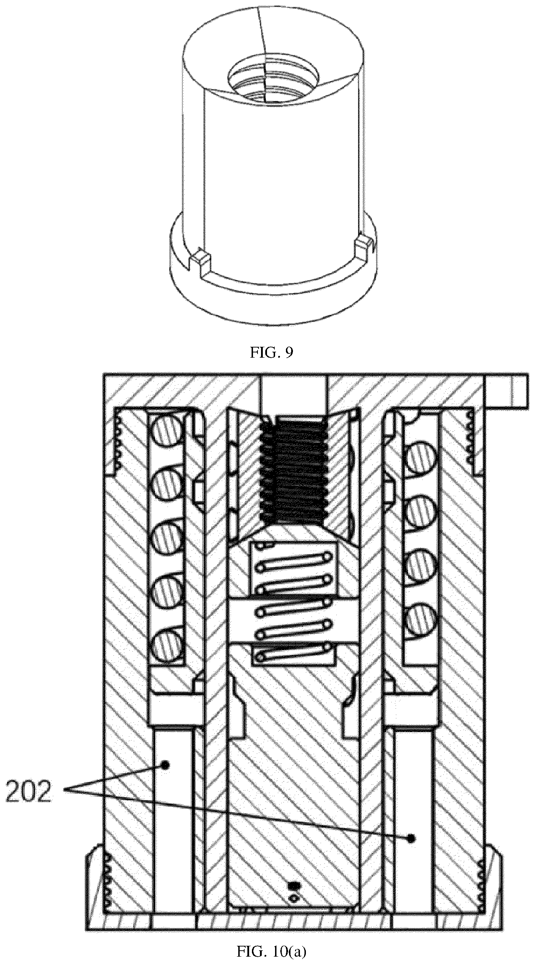

As shown in FIG. 6, FIG. 8 and FIG. 9, the upper end of the segmented nut 3 is provided with the anti-rotation groove 303 engaged with the anti-rotation key 101 on the cage 1 to prevent a rotation of the segmented nut 3 caused by the friction between the threads in the course of screwing a screw into the closed segmented nut 3 for loading, so as to avoid a failure to load the release device. As shown in FIG. 9, after the segmented nut 3 is combined into a complete thread, the outer surface of the segmented nut 3 is a complete and smooth cylinder without matched steps to facilitate processing.

The cage 1 entirely includes an inner cylinder and an outer cylinder. The inner cylinder is relatively long, and is configured to maintain the spatial positions of the locking ball 4 and the detent ball 9 and provide a moving track for the segmented nut 3, the separation cone 6 and the detent latch 10. In addition, the lower end of the inner cylinder fits with the cylindrical hole at the bottom of the housing 2. The outer cylinder is relatively short and is connected to the housing 2 by means of a thread connection, a pin connection, welding, interference fit, adhesive bonding and others. The upper end of the inner cylinder is provided with the anti-rotation key 101 engaged with the anti-rotation groove 303 on the segmented nut 3, as shown in FIG. 8. Two rows of holes are circumferentially distributed on the side wall of the upper portion of the inner cylinder and configured to restrict the spatial position of the locking ball 4. A row of holes are circumferentially and uniformly distributed at the lower portion of the inner cylinder and configured to restrict the spatial position of the detent ball 9. The upper portion of the cage 1 is provided with a conical surface or a flat surface matched with the first separation ramp 301 at the upper end of the segmented nut. The center of the top surface of the cage is provided with a hole configured to screw the connection screw into the segmented nut, and a flange configured to be connected to an external structure.

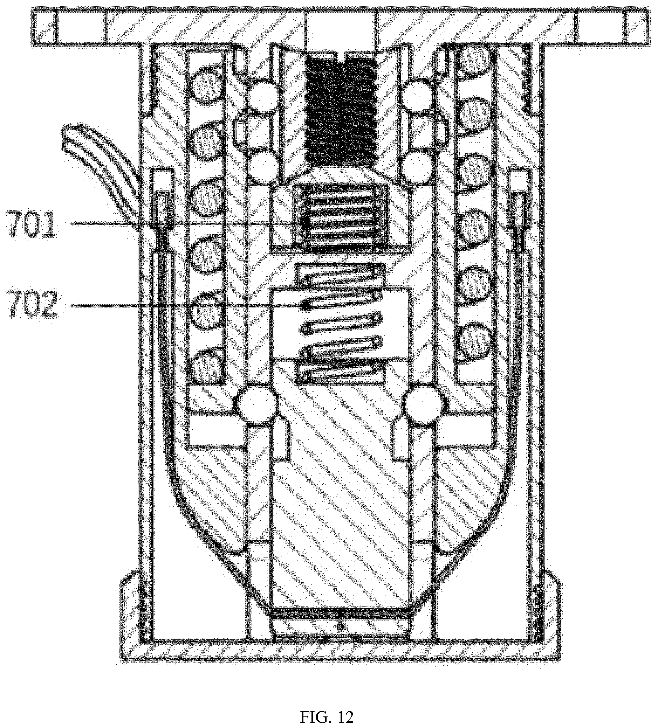

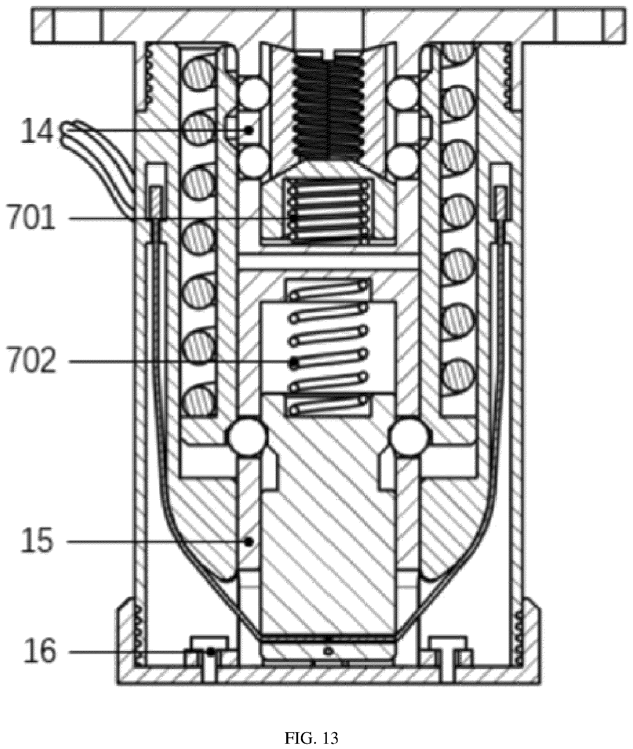

The upper end of the separation/reset spring 7 is located in the lower end hole of the separation cone 6, and the lower end of the separation/reset spring 7 is located in the upper end hole of the detent latch 10. The separation/reset spring is not connected to the cage 1 or other structures. During the operation process of the release device, both the upper end and the lower end of the separation/reset spring move, but the separation/reset spring always maintains a compressed state. The separation/reset spring facilitates separation and reset concurrently due to its connection to the separation cone 6 and the detent latch 10. During the release process, the separation/reset spring pushes the separation cone 6 to move upward to open and separate the segmented nut. During the reset process, the separation/reset spring presses downward the detent latch 10, and the detent ball 9 is squeezed into the detent ball hole of the cage 1 through the second reset ramp 1002 on the detent latch 10, so as to lock the locking sleeve 8 and realize the reset. In addition, due to the compact assembly structure of the separation/reset spring 7, the cage 1 is not specifically provided with a special structure designed as a mounting support for the separation/reset spring, which reduces the complexity of the cage and shortens the axial size of the release device. Optionally, if the structural complexity of the cage 1 and the overall size of the release device are not concerned, other alternative technical solutions may also be adopted. For example, in a feasible technical solution shown in FIG. 12, the separation/reset spring 7 are divided and respectively replaced by the separation spring 701 and the reset spring 702, and circular partition structures are provided on the cage 1 and configured to mount the separation spring 701 and the reset spring 702. In another feasible technical solution shown in FIG. 13, the cage 1 is divided into the first cage 14 and the second cage 15, the separation spring 701 is mounted inside the first cage 14, the reset spring 702 is mounted inside the second cage, and the second cage is connected to the housing 2 through the connection screw 16.

As shown in FIG. 3, the locking sleeve 8 is entirely a thin-wall cylinder structure. The upper end of the inner wall of the locking sleeve 8 is provided with the first reset ramp 801. During the release process, the first reset ramp 801 ensures that the locking ball can smoothly slide into the bottom of the ramp to reduce the damage to the locking sleeve 8 caused by the impact during release. In addition, during the reset process, the ramp can apply a radial component force to the locking ball 4 to ensure that the locking ball 4 can be pushed back into the corresponding hole of the cage 1 to reset the release device. The lower end of the locking sleeve 8 is provided with the first detent ramp 802, and the first detent ramp 802 is supported by the detent ball 9 in the locking state to lock the locking sleeve 8 and maintain the locking state of the release device. During release, the ramp applies a radial component force to the detent ball 9 and pushes the detent ball 9 into the corresponding groove of the detent latch 10 to realize the release of the release device. As shown in FIG. 5, the angle γ of the ramp further determines the normal force applied to the detent latch 10 by the detent ball 9, the normal force applied to the locking sleeve 8 by the driving spring 5 is *F_{spring},* and the normal force applied to the detent ball 9 by the locking sleeve 8 is *F_{spring}*/tan *γ.* A greater normal force applied to the detent latch 10 by the detent ball 9 results in a greater load that the non-explosive actuator requires to push the detent latch 10. Therefore, during the specific implementation, a suitable first detent ramp 802 is selected according to the load output capability of the non-explosive actuator and the elastic force of the driving spring 5. The inner wall of the locking sleeve 8 is in a precise fit with the outer wall of the inner cylinder of the cage 1, and the outer wall of the locking sleeve 8 is in a clearance fit with the driving spring 5. In the locking state, the first reset ramp 801 of the locking sleeve 8 should be located at a predetermined position above the corresponding locking ball hole on the cage 1, to ensure that the locking ball can be locked in the locking state, and the locking ball 4 can completely roll to the bottom of the ramp when the driving spring 5 pushes the locking sleeve 8 downward to the extreme position. In the locking state, the first detent ramp 802 of the locking sleeve 8 should exactly contact the detent ball 9 to maintain the locking state of the release device. Meanwhile, a small gap is reserved between the top end of the locking sleeve and the cage 1, to ensure that the locking sleeve 8 is not mis-positioned in the axial direction.

As shown in FIG. 3, the outer portion of the housing 2 is a cylindrical structure, and the inner portion of the housing 2 is a stepped hole structure including the large cylindrical hole 203 and the small cylindrical hole 204. The upper end of the outer wall of the housing can be connected to the inner wall of the outer cylinder of the cage 1 by a thread connection or in other manners. The small cylindrical hole 204 at the lower end of the inner portion of the housing is fitted with the outer wall of the inner cylinder of the cage 1. The large cylindrical hole 203 at the upper end of the inner portion of the housing provides a mounting and moving space for the driving spring 5 and the locking sleeve 8. Multiple grooved structures 205 and the arc transitions 201 are provided at the inner portion of the housing and configured to arrange the shape memory alloy actuator and the power supply wire. As shown in FIG. 10 (a), two or more reset holes 202 are symmetrically distributed at the bottom of the housing and configured to insert the reset pin 13 of the reset tool 11 therein to push the locking sleeve 8 to move upward to realize reset during the reset process.

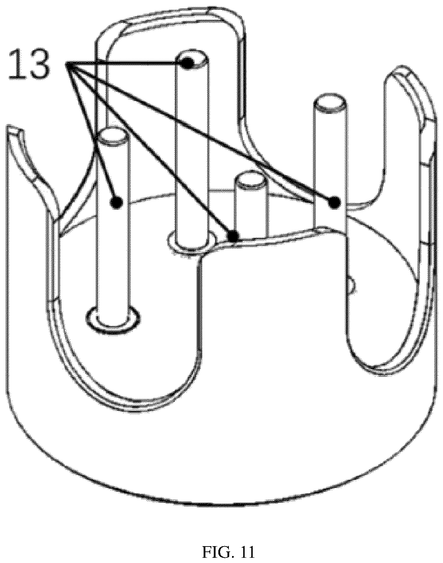

As shown in FIG. 11, the reset tool 11 of the release device is a thin-wall cylinder structure with one end closed. The cylinder wall of the reset tool 11 is provided with one or more U-shaped notches configured to avoid the power supply wire pulled out from the side wall of the release device during the reset process. Two or more reset pins 13 are symmetrically arranged on the base of the reset tool 11, and the number and distribution manner of the two or more reset pins are the same as those of the reset holes 202 at the bottom of the housing.

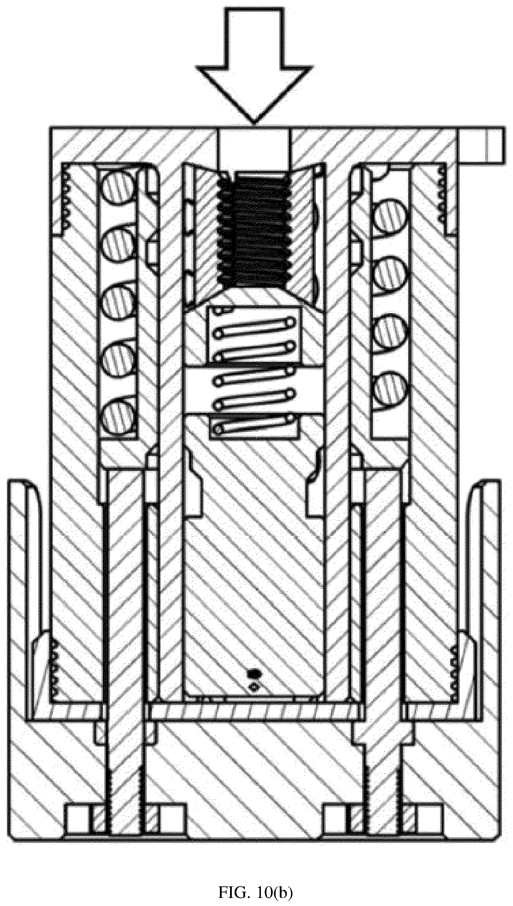

As shown in FIG. 10 (b), the reset method of the release device is as follows. The locking sleeve 8 is pushed upward to a locked position of the locking sleeve 8 by the reset tool, the locking ball 4 is synchronously pushed to lock the segmented nut 3, the driving spring 5 is compressed, and the detent ball 9 is synchronously pushed out by the detent latch 10, so as to lock the locking sleeve 8.

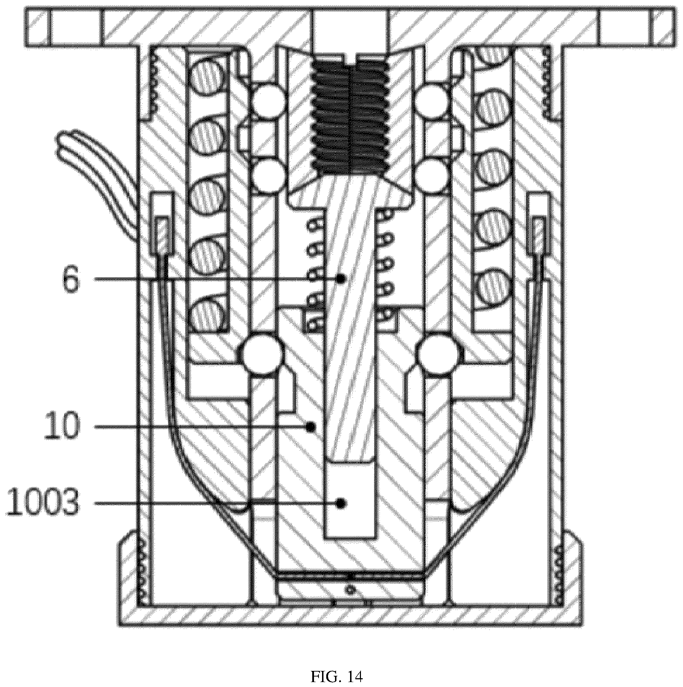

As shown in FIG. 1, the upper end of the separation cone 6 is provided with a conical surface that is matched with the first separation ramp 301 at the lower end of the segmented nut 3. The side wall of the separation cone 6 is an outer cylindrical surface matched with the inner wall of the inner cylinder of the cage 1. The bottom of the separation cone 6 is provided with a cylindrical hole configured to mount the separation/reset spring 7. In another feasible embodiment of the separation cone 6 shown in FIG. 14, the entire separation cone 6 is a T-shaped structure, the outer cylindrical surface of the separation cone 6 does not contact the inner wall of the inner cylinder of the cage 1, the lower end of the separation cone 6 is an elongated cylinder fitted with the sliding hole 1003 on the detent latch 10, and the elongated cylinder can slide up and down in the sliding hole 1003.

The working principle of the device is as follows. In the locking state, the segmented nut 3 is locked by the locking ball 4, and the segmented nut is closed and functions as a common thread to achieve the connection function. When separated, the non-explosive actuator 11 is powered and actuated to output a displacement and force to the outside, and pushes the detent latch (10) to move upward. The detent ball 9 slides into the corresponding groove of the detent latch (10) to release the constraint on the locking sleeve 8. The locking sleeve 8 moves downward under the force of the driving spring 5, so that the locking ball 4 slides into the corresponding groove of the locking sleeve to release the constraint on the segmented nut 3. The segmented nut 3 is opened under the action of the separation/reset spring 7 to disconnect the screw connection and complete the release. When reset, the reset tool is inserted from the bottom of the release device to pin the locking sleeve 8 up to the locked position of the locking sleeve 8. The detent latch 10 pushes downward the detent ball 9 to squeeze the detent ball 9 back to the locked position of the detent ball 9 under the action of the separation/reset spring, so as to re-lock the locking sleeve 8. At the same time, the locking sleeve 8 squeezes all the locking balls 4 back to the locked positions of the respective locking balls 4 to re-lock the segmented nut 3, so that the segmented nut forms a complete thread to reset the device.

## Claims

1. A non-explosive release device using a segmented nut, comprising: a mounting space formed by a cage (1), a housing (2) and an end cover (12), **characterized in that**: the cage (1) comprises a cylindrical structure and is located in the mounting space; a side wall of the cylindrical structure is provided with a plurality of holes; a detent ball (9) and a locking ball (4) are in a clearance fit with the plurality of holes, respectively, and the detent ball (9) and the locking ball (4) roll freely;
a locking sleeve (8) is located inside the housing (2), an inner cylindrical surface of the locking sleeve (8) and an outer cylindrical surface of the cylindrical structure of the cage (1) form a hole-and-shaft fitting; a lower end of the locking sleeve (8) is provided with the detent ball (9); a driving spring (5) is pre-compressed to tightly compress the locking sleeve (8) on the detent ball (9);
a segmented nut (3), a separation cone (6), a separation/reset spring (7) and a detent latch (10) are arranged in the cylindrical structure in sequence; an outer cylindrical surface of the separation cone (6) and an inner cylindrical surface of the cylindrical structure of the cage (1) form a shaft-and-hole fitting; a lower end of the separation cone (6) is tightly supported by the separation/reset spring (7);
in a locking state, the locking ball (4) is located in a corresponding hole inside the cage (1); one side of the locking ball (4) is in contact with the locking sleeve (8), and the other side of the locking ball (4) is in contact with the segmented nut (3); the segmented nut is completely closed to form a complete thread under an action of the locking ball (4); and
in a release state, a non-explosive actuator (11) drives the detent latch (10) to move upward, the detent ball (9) enters a groove at a top of the detent latch (10), the locking sleeve (8) is axially released, the locking ball (4) enters a groove corresponding to the locking sleeve (8) to radially release the segmented nut (3) to complete a release operation.

2. The non-explosive release device using the segmented nut according to claim 1, **characterized in that**: an upper end of the segmented nut (3) is provided with a conical surface matched with a corresponding conical surface of the cage (1), and a lower end of the segmented nut (3) is provided with a conical surface matched with a corresponding conical surface of the separation cone (6).

3. The non-explosive release device using the segmented nut according to claim 1, **characterized in that**: the non-explosive actuator (11) is located in a space formed between the housing (2) and the end cover (12), an output end of the non-explosive actuator (11) is connected to the detent latch (10) and configured to drive the detent latch (10) to move.

4. The non-explosive release device using the segmented nut according to claim 1, **characterized in that**: in a closed state, the segmented nut (3) is locked by upper row locking balls and lower row locking balls (4) that are arranged circumferentially, an upper side and a lower side of the segmented nut (3) are in contact with two locking balls, respectively; in a separated state, an outer cylindrical surface of the segmented nut (3) is in contact with an inner wall of the cylindrical structure of the cage (1), an upper end of the segmented nut (3) is still matched with the cage (1) through a conical surface or a flat surface, and a lower end of the segmented nut (3) is still matched with the separation cone (6) through a conical surface, to maintain a spatial position of the segmented nut (3).

5. The non-explosive release device using the segmented nut according to claim 1, **characterized in that**: an upper end of the segmented nut (3) is provided with an anti-rotation groove (303) engaged with an anti-rotation key (101) on the cage (1).

6. The non-explosive release device using the segmented nut according to claim 1, **characterized in that**: the cylindrical structure of the cage (1) comprises an inner cylinder and an outer cylinder; the inner cylinder is long, and the inner cylinder is configured to maintain a spatial position of the locking ball (4) and a spatial position of the detent ball (9), and provide a moving track for the segmented nut (3), the separation cone (6) and the detent latch (10); a lower end of the inner cylinder is fitted with a cylindrical hole at a bottom of the housing; the outer cylinder is short and is fitted with the housing (2); an anti-rotation key (101) at an upper end of the inner cylinder is engaged with an anti-rotation groove (303) on the segmented nut (3).

7. The non-explosive release device using the segmented nut according to claim 1, **characterized in that**: the locking sleeve (8) is a thin-wall cylinder structure, an upper end of an inner wall of the locking sleeve (8) is provided with a first reset ramp (801); a lower end of the inner wall of the locking sleeve (8) is provided with a first detent ramp (802); a bottom of the locking sleeve (8) is provided with a step configured to place the driving spring (5); the inner wall of the locking sleeve (8) is in a precise fit with an outer wall of an inner cylinder of the cage (1), and an outer wall of the locking sleeve (8) is in a clearance fit with the driving spring (5); in the locking state, the first reset ramp (801) of the locking sleeve (8) is located at a predetermined position above a corresponding locking ball hole in the cage (1), the first detent ramp (802) of the locking sleeve (8) is exactly in contact with the detent ball (9), and a small gap is reserved between a top end of the locking sleeve (8) and the cage (1).

8. The non-explosive release device using the segmented nut according to claim 7, **characterized in that**: an outer portion of the housing (2) is a cylindrical structure, an inner portion of the housing (2) is a stepped hole structure, an upper end of an outer wall of the housing (2) is fitted with an inner wall of an outer cylinder of the cage (1) by a thread connection or in other manners; a cylindrical hole at a lower end of the inner portion of the housing (2) is fitted with the outer wall of the inner cylinder of the cage (1), and two or more reset holes are symmetrically distributed at a bottom of the housing (2).

9. The non-explosive release device using the segmented nut according to claim 8, further comprising: a reset tool, **characterized in that**: the reset tool is a thin-wall cylinder structure, and a cylinder wall of the reset tool is provided with one or more U-shaped notches; two or more reset pins (13) are symmetrically arranged on a base of the reset tool; and a number and a distribution manner of the two or more reset pins are the same as a number and a distribution manner of the two or more reset holes at the bottom of the housing (2).

10. The non-explosive release device using the segmented nut according to claim 1, **characterized in that**: an upper end of the separation cone (6) is provided with a conical surface matched with the segmented nut (3); a side wall of the separation cone (6) is an outer cylindrical surface matched with an inner wall of the inner cylinder of the cage (1), and a bottom of the separation cone (6) is provided with a cylindrical hole configured to mount the separation/reset spring (7).

## Patentansprüche

1. Nicht-explosive Auslösevorrichtung unter Verwendung einer segmentierten Mutter, umfassend: einen Montageraum, der durch einen Käfig (1), ein Gehäuse (2) und einen Endabdeckung (12) gebildet ist, **dadurch gekennzeichnet, dass**: der Käfig (1) eine zylindrische Struktur umfasst und in dem Montageraum angeordnet ist; eine Seitenwand der zylindrischen Struktur mit einer Vielzahl von Bohrungen vorgesehen ist; eine Rastkugel (9) und eine Verriegelungskugel (4) in einer Spielpassung mit der Vielzahl von Bohrungen sind, jewils, und die Rastkugel (9) und die Verriegelungskugel (4) frei rollen;
eine Verriegelungshülse (8) sich innerhalb des Gehäuses (2) befindet, eine innere zylindrische Oberfläche der Verriegelungshülse (8) und eine äußere zylindrische Oberfläche der zylindrischen Struktur des Käfigs (1) eine Wellen- und Bohrungspassung bilden; ein unteres Ende der Verriegelungshülse (8) mit der Rastkugel (9) vorgesehen ist; eine Antriebsfeder (5) vorgespannt ist, um die Verriegelungshülse (8) auf der Rastkugel (9) fest zusammenzudrücken;
in der zylindrischen Struktur nacheinander eine segmentierte Mutter (3), ein Trennkonus (6), eine Trenn-/Rückstellfeder (7) und eine Halteklinke (10) angeordnet sind; eine äußere zylindrische Oberfläche des Trennkonus (6) und eine innere zylindrische Oberfläche der zylindrischen Struktur des Käfigs (1) eine Wellen- und Bohrungspassung bilden; ein unteres Ende des Trennkonus (6) von der Trenn-/Rückstellfeder (7) fest abgestützt wird;
in einem verriegelten Zustand sich die Verriegelungskugel (4) in einer entsprechenden Bohrung im Inneren des Käfigs (1) befindet; eine Seite der Verriegelungskugel (4) in Kontakt mit der Verriegelungshülse (8) ist, und die andere Seite der Verriegelungskugel (4) in Kontakt mit der segmentierten Mutter (3) ist; die segmentierte Mutter vollständig geschlossen ist, um ein vollständiges Gewinde unter einer Wirkung der Verriegelungskugel (4) zu bilden; und
in einem Freigabezustand ein nicht explosiver Aktuator (11) die Halteklinke (10) antreibt, um sich nach oben zu bewegen, die Rastkugel (9) in eine Nut an einer Oberseite der Halteklinke (10) eintritt, die Verriegelungshülse (8) axial freigegeben wird, die Verriegelungskugel (4) in eine mit der Verriegelungshülse (8) korrespondierende Nut eintritt, um die segmentierte Mutter (3) radial freizugeben, um einen Freigabevorgang abzuschließen.

2. Nicht-explosive Auslösevorrichtung unter Verwendung der segmentierten Mutter nach Anspruch 1, **dadurch gekennzeichnet, dass**: ein oberes Ende der segmentierten Mutter (3) mit einer konischen Oberfläche vorgesehen ist, die an eine entsprechende konische Oberfläche des Käfigs (1) angepasst ist, und ein unteres Ende der segmentierten Mutter (3) mit einer konischen Oberfläche vorgesehen ist, die an eine entsprechende konische Oberfläche des Trennkonus (6) angepasst ist.

3. Nicht-explosive Auslösevorrichtung unter Verwendung der segmentierten Mutter nach Anspruch 1, **dadurch gekennzeichnet, dass**: der nicht-explosive Aktuator (11) in einem Raum angeordnet ist, der zwischen dem Gehäuse (2) und der Endabdeckung (12) gebildet ist, ein Ausgangsende des nicht-explosiven Aktuators (11) mit der Halteklinke (10) verbunden ist und konfiguriert ist, um die Halteklinke (10) zu bewegen.

4. Nicht-explosive Auslösevorrichtung unter Verwendung der segmentierten Mutter nach Anspruch 1, **dadurch gekennzeichnet, dass**: in einem geschlossenen Zustand die segmentierte Mutter (3) durch eine obere Reihe von Verriegelungskugeln und eine untere Reihe von Verriegelungskugeln (4), die in Umfangsrichtung angeordnet sind, verriegelt ist, wobei eine obere Seite und eine untere Seite der segmentierten Mutter (3) in Kontakt mit jeweils zwei Verriegelungskugeln sind; in einem getrennten Zustand ist eine äußere zylindrische Oberfläche der segmentierten Mutter (3) in Kontakt mit einer inneren Wand der zylindrischen Struktur des Käfigs (1), ein oberes Ende der segmentierten Mutter (3) ist immer noch mit dem Käfig (1) durch eine konische Oberfläche oder eine flache Oberfläche zusammengefügt, und ein unteres Ende der segmentierten Mutter (3) ist immer noch mit dem Trennkonus (6) durch eine konische Oberfläche zusammengefügt, um eine räumliche Position der segmentierten Mutter (3) beizubehalten.

5. Nicht-explosive Auslösevorrichtung unter Verwendung der segmentierten Mutter nach Anspruch 1, **dadurch gekennzeichnet, dass**: ein oberes Ende der segmentierten Mutter (3) mit einer Verdrehsicherungsnut (303) vorgesehen ist, die mit einem Verdrehsicherungsschlüssel (101) am Käfig (1) in Eingriff steht.

6. Nicht-explosive Auslösevorrichtung unter Verwendung der segmentierten Mutter nach Anspruch 1, **dadurch gekennzeichnet, dass**: die zylindrische Struktur des Käfigs (1) einen inneren Zylinder und einen äußeren Zylinder umfasst; der innere Zylinder lang ist und der innere Zylinder so konfiguriert ist, dass er eine räumliche Position der Verriegelungskugel (4) und eine räumliche Position der Rastkugel (9) beibehält und eine Bewegungsbahn für die segmentierte Mutter (3), den Trennkonus (6) und die Halteklinke (10) bereitstellt; ein unteres Ende des inneren Zylinders in eine zylindrische Bohrung an einem Boden des Gehäuses eingepasst ist; der äußere Zylinder kurz ist und in das Gehäuse (2) eingepasst ist; ein Verdrehsicherungsschlüssel (101) an einem oberen Ende des inneren Zylinders mit einer Verdrehsicherungsnut (303) an der segmentierten Mutter (3) in Eingriff ist.

7. Nicht-explosive Auslösevorrichtung unter Verwendung der segmentierten Mutter nach Anspruch 1, **dadurch gekennzeichnet, dass**: die Verriegelungshülse (8) eine dünnwandige Zylinderstruktur ist, ein oberes Ende einer Innenwand der Verriegelungshülse (8) mit einer ersten Rücksetzrampe (801) vorgesehen ist; ein unteres Ende der Innenwand der Verriegelungshülse (8) mit einer ersten Rastrampe (802) vorgesehen ist; ein Boden der Verriegelungshülse (8) mit einer Stufe vorgesehen ist, die so konfiguriert ist, dass sie die Antriebsfeder (5) platziert; die Innenwand der Verriegelungshülse (8) in einer genauen Passung mit einer Außenwand eines inneren Zylinders des Käfigs (1) ist, und eine Außenwand der Verriegelungshülse (8) in einer Spielpassung mit der Antriebsfeder (5) ist; in dem Verriegelungszustand die erste Rücksetzrampe (801) der Verriegelungshülse (8) an einer vorbestimmten Position über einer entsprechenden Verriegelungskugelbohrung in dem Käfig (1) angeordnet ist, die erste Rastrampe (802) der Verriegelungshülse (8) genau in Kontakt mit der Rastkugel (9) ist, und ein kleiner Spalt zwischen einem oberen Ende der Verriegelungshülse (8) und dem Käfig (1) reserviert ist.

8. Nicht-explosive Auslösevorrichtung unter Verwendung der segmentierten Mutter nach Anspruch 7, **dadurch gekennzeichnet, dass**: ein äußerer Abschnitt des Gehäuses (2) eine zylindrische Struktur ist, ein innerer Abschnitt des Gehäuses (2) eine Struktur mit abgestuften Bohrungen ist, ein oberes Ende einer äußeren Wand des Gehäuses (2) mit einer inneren Wand eines äußeren Zylinders des Käfigs (1) durch eine Gewindeverbindung oder auf andere Weise zusammengefügt ist; eine zylindrische Bohrung an einem unteren Ende des inneren Abschnitts des Gehäuses (2) mit der äußeren Wand des inneren Zylinders des Käfigs (1) zusammengefügt ist, und zwei oder mehr Rückstellbohrungen symmetrisch an einem Boden des Gehäuses (2) verteilt sind.

9. Nicht-explosive Auslösevorrichtung unter Verwendung der segmentierten Mutter nach Anspruch 8, ferner umfassend: ein Rückstellwerkzeug, **dadurch gekennzeichnet, dass**: das Rückstellwerkzeug eine dünnwandige Zylinderstruktur ist und eine Zylinderwand des Rückstellwerkzeugs mit einer oder mehreren U-förmigen Kerben vorgesehen ist; zwei oder mehrere Rückstellstifte (13) symmetrisch an einer Basis des Rückstellwerkzeugs angeordnet sind; und eine Anzahl und eine Verteilungsart der zwei oder mehreren Rückstellstifte die gleiche ist wie eine Anzahl und eine Verteilungsart der zwei oder mehreren Rückstellbohrungen am Boden des Gehäuses (2).

10. Nicht-explosive Auslösevorrichtung unter Verwendung der segmentierten Mutter nach Anspruch 1, **dadurch gekennzeichnet, dass**: ein oberes Ende des Trennkonus (6) mit einer konischen Oberfläche vorgesehen ist, die an die segmentierte Mutter (3) angepasst ist; eine Seitenwand des Trennkonus (6) eine äußere zylindrische Oberfläche ist, die an eine innere Wand des inneren Zylinders des Käfigs (1) angepasst ist, und ein Boden des Trennkonus (6) mit einer zylindrischen Bohrung vorgesehen ist, das so konfiguriert ist, dass es die Trenn-/Rückstellfeder (7) befestigt.

## Revendications

1. Dispositif de déclenchement non-explosif utilisant un écrou segmenté, comprenant : un espace de montage formé par une cage (1), un boîtier (2) et un couvercle d'extrémité (12), **caractérisé en ce que** : la cage (1) comprend une structure cylindrique et est située dans l'espace de montage ; une paroi latérale de la structure cylindrique est pourvue d'une pluralité de trous ; une bille de détente (9) et une bille de verrouillage (4) sont en ajustement libre avec la pluralité de trous, respectivement, et la bille de détente (9) et la bille de verrouillage (4) roulent librement ;
un manchon de verrouillage (8) est situé à l'intérieur du logement (2), une surface cylindrique intérieure du manchon de verrouillage (8) et une surface cylindrique extérieure de la structure cylindrique de la cage (1) forment un raccord à trou et arbre ; une extrémité inférieure du manchon de verrouillage (8) est pourvue de la bille de détente (9) ; un ressort d'entraînement (5) est précomprimé pour comprimer étroitement le manchon de verrouillage (8) sur la bille de détente (9) ;
un écrou segmenté (3), un cône de séparation (6), un ressort de séparation/réarmement (7) et un loquet de détente (10) sont disposés en séquence dans la structure cylindrique ; une surface cylindrique extérieure du cône de séparation (6) et une surface cylindrique intérieure de la structure cylindrique de la cage (1) forment un raccord à trou et arbre ; une extrémité inférieure du cône de séparation (6) est étroitement soutenue par le ressort de séparation/réarmement (7) ;
dans un état de verrouillage, la bille de verrouillage (4) est située dans un trou correspondant à l'intérieur de la cage (1) ; un côté de la bille de verrouillage (4) est en contact avec le manchon de verrouillage (8), et l'autre côté de la bille de verrouillage (4) est en contact avec l'écrou segmenté (3) l'écrou segmenté est complètement fermé pour former un filet complet sous l'action de la bille de verrouillage (4) ; et
dans un état de libération, un actionneur non explosif (11) entraîne le loquet de détente (10) pour le déplacer vers le haut, la bille de détente (9) pénètre dans une rainure au sommet du loquet de détente (10), le manchon de verrouillage (8) est libéré axialement, la bille de verrouillage (4) pénètre dans une rainure correspondant au manchon de verrouillage (8) pour libérer radialement l'écrou segmenté (3) afin de compléter une opération de libération.

2. Dispositif de déclenchement non-explosif utilisant un écrou segmenté selon la revendication 1, **caractérisé en ce que**: une extrémité supérieure de l'écrou segmenté (3) est pourvue d'une surface conique correspondant à une surface conique correspondante de la cage (1), et une extrémité inférieure de l'écrou segmenté (3) est pourvue d'une surface conique correspondant à une surface conique correspondante du cône de séparation (6).

3. Dispositif de déclenchement non-explosif utilisant un écrou segmenté selon la revendication 1, **caractérisé en ce que**: l'actionneur non-explosif (11) est situé dans un espace formé entre le boîtier (2) et le couvercle d'extrémité (12), une extrémité de sortie de l'actionneur non explosif (11) est connectée au loquet de détente (10) et configurée pour entraîner le loquet de détente (10) à se déplacer.

4. Dispositif de déclenchement non-explosif utilisant un écrou segmenté selon la revendication 1, **caractérisé en ce que**: dans un état fermé, l'écrou segmenté (3) est verrouillé par des billes de verrouillage de rangée supérieure et des billes de verrouillage de rangée inférieure (4) qui sont disposées de manière circonférentielle, un côté supérieur et un côté inférieur de l'écrou segmenté (3) sont en contact avec deux billes de verrouillage, respectivement ; dans un état séparé, une surface cylindrique extérieure de l'écrou segmenté (3) est en contact avec une paroi intérieure de la structure cylindrique de la cage (1), une extrémité supérieure de l'écrou segmenté (3) est encore adaptée à la cage (1) par une surface conique ou une surface plate, et une extrémité inférieure de l'écrou segmenté (3) est encore adaptée au cône de séparation (6) par une surface conique, pour maintenir une position spatiale de l'écrou segmenté (3)

5. Dispositif de déclenchement non-explosif utilisant un écrou segmenté selon la revendication 1, **caractérisé en ce que**: une extrémité supérieure de l'écrou segmenté (3) est pourvue d'une rainure anti-rotation (303) engagée avec une clavette anti-rotation (101) sur la cage (1).

6. Dispositif de déclenchement non-explosif utilisant un écrou segmenté selon la revendication 1, **caractérisé en ce que**: la structure cylindrique de la cage (1) comprend un cylindre intérieur et un cylindre extérieur ; le cylindre intérieur est long, et le cylindre intérieur est configuré pour maintenir une position spatiale de la bille de verrouillage (4) et une position spatiale de la bille de détente (9), et fournit une piste de déplacement pour l'écrou segmenté (3), le cône de séparation (6) et le loquet de détente (10) ; une extrémité inférieure du cylindre intérieur est ajustée à un trou cylindrique au fond du boîtier ; le cylindre extérieur est court et est ajusté au boîtier (2) ; une clavette anti-rotation (101) à une extrémité supérieure du cylindre interne est engagée avec une rainure anti-rotation (303) sur l'écrou segmenté (3).

7. Dispositif de déclenchement non-explosif utilisant un écrou segmenté selon la revendication 1, **caractérisé en ce que**: le manchon de verrouillage (8) est une structure cylindrique à paroi mince, une extrémité supérieure d'une paroi interne du manchon de verrouillage (8) est pourvue d'une première rampe de réarmement (801) ; une extrémité inférieure de la paroi intérieure du manchon de verrouillage (8) est pourvue d'une première rampe de réarmement (802) ; un fond du manchon de verrouillage (8) est pourvu d'un échelon configuré pour placer le ressort d'entraînement (5) ; la paroi intérieure du manchon de verrouillage (8) est en ajustement précis avec une paroi extérieure d'un cylindre intérieur de la cage (1), et une paroi extérieure du manchon de verrouillage (8) est en ajustement avec jeu avec le ressort d'entraînement (5) ; dans l'état de verrouillage, la première rampe de réarmement (801) du manchon de verrouillage (8) est située à une position prédéterminée au-dessus d'un trou de bille de verrouillage correspondant dans la cage (1), la première rampe de détente (802) du manchon de verrouillage (8) est exactement en contact avec la bille de détente (9), et un petit espace est réservé entre une extrémité supérieure du manchon de verrouillage (8) et la cage (1).

8. Dispositif de déclenchement non-explosif utilisant un écrou segmenté selon la revendication 7, **caractérisé en ce que**: une partie extérieure du boîtier (2) est une structure cylindrique, une partie intérieure du boîtier (2) est une structure à trous étagés, une extrémité supérieure d'une paroi extérieure du boîtier (2) est ajustée avec une paroi intérieure d'un cylindre extérieur de la cage (1) par une connexion filetée ou d'autres manières ; un trou cylindrique à une extrémité inférieure de la partie intérieure du boîtier (2) est ajusté avec la paroi extérieure du cylindre intérieur de la cage (1), et deux ou plusieurs trous de remise à zéro sont répartis symétriquement à un fond du boîtier (2).

9. Dispositif de déclenchement non-explosif utilisant un écrou segmenté selon la revendication 8, comprenant en outre: un outil de réarmement, **caractérisé en ce que** : l'outil de réarmement est une structure cylindrique à paroi mince, et une paroi cylindrique de l'outil de réarmement est pourvue d'une ou plusieurs encoches en forme de U ; deux ou plusieurs tiges de réarmement (13) sont disposées symétriquement sur une base de l'outil de réarmement ; et un nombre et une manière de distribution des deux tiges de réarmement ou plus sont les mêmes qu'un nombre et une manière de distribution des deux trous de réarmement ou plus au fond du boîtier (2).

10. Dispositif de déclenchement non-explosif utilisant un écrou segmenté selon la revendication 1, **caractérisé en ce que**: une extrémité supérieure du cône de séparation (6) est pourvue d'une surface conique adaptée à l'écrou segmenté (3) ; une paroi latérale du cône de séparation (6) est une surface cylindrique externe appariée à une paroi interne du cylindre interne de la cage (1), et un fond du cône de séparation (6) est pourvu d'un trou cylindrique configuré pour monter le ressort de séparation/réarmement (7).
